# EUROPÄISCHE PATENTSCHRIFT

(11) **EP 3 548 786 B1**
(45) Veröffentlichungstag und Bekanntmachung des Hinweises auf die Patenterteilung: **02.09.2020**
(21) Anmeldenummer: 16806081.2
(22) Anmeldetag: 05.12.2016
(51) Int. Cl.: F16L 37/22

(54) **STECKERTEIL FÜR EINE STECKKUPPLUNG UND STECKKUPPLUNG MIT EINEM STECKERTEIL**
PLUG PART FOR A PLUG-IN COUPLING, AND PLUG-IN COUPLING HAVING A PLUG PART
PARTIE MÂLE POUR UN ACCOUPLEMENT ENFICHABLE ET ACCOUPLEMENT ENFICHABLE COMPRENANT UNE PARTIE MÂLE

(43) Veröffentlichungstag der Anmeldung: 09.10.2019
(73) Patentinhaber: Alfred Kärcher SE & Co. KG, 71364 Winnenden (DE)
(72) Erfinder: RUCKWIED, David, 71679 Asperg (DE); SEITTER, Ralph, 71522 Backnang (DE)
(74) Vertreter: Hoeger, Stellrecht & Partner Patentanwälte mbB
(86) Internationale Anmeldenummer: PCT/EP2016/079763
(87) Internationale Veröffentlichungsnummer: WO 2018/103816

(56) Entgegenhaltungen:
- EP-A1- 0 803 676
- EP-A1- 1 006 307
- EP-A1- 2 130 565
- WO-A1-80/01311
- WO-A1-2007/076906
- CH-A- 553 366
- US-A1- 2007 235 092

## Beschreibung

Die Erfindung betrifft ein Steckerteil für eine Steckkupplung für Flüssigkeitsleitungen einer Hochdruckreinigungseinrichtung, wobei das Steckerteil die im Oberbegriff von Patentanspruch 1 genannten Merkmale aufweist.

Außerdem betrifft die Erfindung eine Steckkupplung für Flüssigkeitsleitungen einer Hochdruckreinigungseinrichtung mit einem derartigen Steckerteil.

Steckkupplungen kommen bei Hochdruckreinigungseinrichtungen zum Einsatz, um Flüssigkeitsleitungen flüssigkeitsdicht und lösbar miteinander verbinden zu können. Mit Hilfe einer Steckkupplung kann beispielsweise ein Hochdruckschlauch mit einem Hochdruckreinigungsgerät verbunden werden, und es kann beispielsweise auch eine lösbare und flüssigkeitsdichte Verbindung zwischen dem Hochdruckschlauch und einer Flüssigkeitsabgabeeinrichtung, insbesondere einer Spritzpistole, hergestellt werden. Auch eine lösbare und flüssigkeitsdichte Verbindung zwischen einer Spritzpistole und einer Sprühlanze sowie zwischen einer Sprühlanze und einer Sprühdüse kann mit Hilfe derartiger Steckkupplungen hergestellt werden. Bei Bedarf können die Steckkupplungen vom Benutzer auch wieder gelöst werden.

Steckkupplungen der hier in Rede stehenden Art kommen für Flüssigkeitsleitungen von Hochdruckreinigungseinrichtungen zum Einsatz, wobei die in den Flüssigkeitsleitungen befindliche Flüssigkeit einen sehr hohen Druck aufweisen kann, beispielsweise einen Druck von mehr als 150 bar, insbesondere einen Druck von 300 bar oder auch 350 bar. Insbesondere können bei Hochdruckreinigungseinrichtungen kurzzeitige Druckspitzen von mehr als 300 bar auftreten. Beispielsweise können derartige Druckspitzen auftreten, wenn der Benutzer ein Ventil einer Flüssigkeitsabgabeleitung schließt, um die Abgabe von Flüssigkeit zu unterbrechen.

Steckkupplungen für Flüssigkeitsleitungen einer Hochdruckreinigungseinrichtung weisen üblicherweise ein Steckerteil und ein Buchsenteil auf, die ineinander gesteckt werden können, um eine lösbare, flüssigkeitsdichte Verbindung herzustellen, und die miteinander verrastet werden können, um zu vermeiden, dass sich die Verbindung zwischen dem Steckerteil und dem Buchsenteil unbeabsichtigt löst, wobei auch ein unbeabsichtigtes Lösen bei Auftreten hoher Druckspitzen zuverlässig unterbunden werden soll.

Ein aus der WO 2007/076906 A1 bekanntes Steckerteil weist einen sich koaxial zur Längsachse des Steckerteils erstreckenden Durchgangskanal für unter Hochdruck stehende Flüssigkeit auf und bildet einen Stecknippel aus, der zur Herstellung einer flüssigkeitsdichten und lösbaren Verbindung unter Zwischenlage eines Dichtrings in eine komplementär ausgestaltete Steckeraufnahme eines Buchsenteils der Steckkupplung einsteckbar und mit der Steckeraufnahme lösbar verrastbar ist. Um den Stecknippel in die Steckeraufnahme einführen zu können, weist er einen kreiszylindrischen Gleitführungsabschnitt auf, der mit einem Aufnahmeabschnitt der Steckeraufnahme formschlüssig zusammenwirkt, indem er an den Aufnahmeabschnitt gleitend anlegbar ist. Zur Herstellung der flüssigkeitsdichten Verbindung ist im Gleitführungsabschnitt eine in Umfangsrichtung umlaufende, in sich geschlossene Dichtringnut angeordnet, die einen Dichtring aufnimmt.

In den Veröffentlichungen US 2,913,263 A, US 3,468,562 und WO 80/01311 A1 wird vorgeschlagen, die Dichtringnut nicht an der Außenseite des Stecknippels anzuordnen sondern an der Innenseite des Aufnahmeabschnitts des Buchsenteils. Dies hat allerdings den Nachteil, dass sich das Auswechseln des in der Dichtringnut positionierten Dichtrings schwierig gestaltet.

Zusätzlich zu einem ersten Gleitführungsabschnitt, in dem die Dichtringnut mit dem Dichtring angeordnet ist, weist das aus der WO 2007/076906 A1 bekannte Steckerteil einen zweiten Gleitführungsabschnitt auf, der mit einem zweiten Aufnahmeabschnitt der Steckeraufnahme des Buchsenteils formschlüssig zusammenwirkt. Der zweite Gleitführungsabschnitt ist ebenfalls kreiszylindrisch ausgestaltet. Dies hat den Vorteil, dass der Stecknippel keine vorgegebene Drehstellung relativ zur Steckeraufnahme einnehmen muss, um in die Steckeraufnahme eingesetzt werden zu können.

Der aus der WO 2007/076906 A1 bekannte zweite Gleitführungsabschnitt ist in Form eines Wulstes ausgestaltet, der mit seiner dem freien Ende des Stecknippels abgewandten Rückseite eine senkrecht zur Längsachse des Steckerteils ausgerichtete Hinterschneidung ausbildet, die von zwei parallel zueinander ausgerichteten, einander diametral gegenüberliegenden, federbelasteten zylindrischen Verriegelungsstiften des Buchsenteils hintergriffen werden kann.

Ein Steckerteil mit den Merkmalen des Oberbegriffes von Patentanspruch 1 ist aus der US 2007/0235092 A1 bekannt. Ein ähnlich ausgestaltetes Steckerteil ist in der EP 2 130 565 A1 offenbart.

Das Einsetzen bekannter Stecknippel in die komplementär ausgestaltete Steckeraufnahme eines Buchsenteils gestaltet sich häufig schwierig, da die Gefahr besteht, dass der Stecknippel verkantet. Der Stecknippel muss deshalb vom Benutzer sehr vorsichtig eingesetzt werden, wobei die Längsachse des Stecknippels kollinear zur Längsachse der Steckeraufnahme ausgerichtet werden muss. Dies erschwert die Handhabung bekannter Steckerteile. Insbesondere ist häufig eine einhändige Bedienung des Steckerteils beim Herstellen der Verbindung mit einer komplementär ausgestalteten Steckeraufnahme nicht ohne Weiteres möglich.

Wie eingangs erwähnt, muss dafür Sorge getragen werden, dass sich das in die Steckeraufnahme eingesetzte und mit dieser verrastete Steckerteil nicht unbeabsichtigt von der Steckeraufnahme löst. Diese Anforderung an das Steckerteil gilt insbesondere auch in Fällen, in denen das Steckerteil nicht nur einer vom Druck der Flüssigkeit hervorgerufenen axialen mechanischen Belastung sondern zusätzlich auch einer quer zur Längsachse des Steckerteils ausgerichteten mechanischen Querbelastung unterliegt. Derartige Querbelastungen können beispielsweise auftreten, wenn über das Steckerteil eine flüssigkeitsdichte Verbindung zu einer Flüssigkeitsabgabeeinrichtung hergestellt wird, beispielsweise zu einer eine beträchtliche Ausdehnung und ein erhebliches Gewicht aufweisenden Sprühlanze, die an einem zu reinigenden Gegenstand entlang bewegt wird. Bei der Bewegung der Sprühlanze unterliegt der Stecknippel des Steckerteils erheblichen Querbelastungen, die das Risiko bergen, dass sich das Steckerteil unbeabsichtigt vom Buchsenteil löst.

Aufgabe der vorliegenden Erfindung ist es daher, ein Steckerteil der eingangs genannten Art sowie eine Steckkupplung für Flüssigkeitsleitungen einer Hochdruckreinigungseinrichtung mit einem solchen Steckerteil derart weiterzubilden, dass das Steckerteil beim Einstecken in eine zugeordnete Steckeraufnahme nicht verkantet und sich auch nicht unbeabsichtigt von der Steckeraufnahme löst.

Diese Aufgabe wird durch ein Steckerteil mit den Merkmalen von Patentanspruch 1 gelöst.

Das erfindungsgemäße Steckerteil weist einen ersten Gleitführungsabschnitt und einen zweiten Gleitführungsabschnitt auf, wobei im ersten Gleitführungsabschnitt eine Dichtringnut zur Aufnahme eines Dichtrings und im zweiten Gleitführungsabschnitt eine Verriegelungsnut zur Aufnahme von zwei einander gegenüberliegenden zylindrischen Verriegelungsstiften angeordnet sind. Der Außendurchmesser des zweiten Gleitführungsabschnitts ist um mindestens ein Viertel größer als der Außendurchmesser des ersten Gleitführungsabschnitts, und der Abstand zwischen der Mitte der Dichtringnut und der Mitte der Verriegelungsnut beträgt mindestens das 1,5-fache des Außendurchmessers des ersten Gleitführungsabschnitts. Es hat sich gezeigt, dass ein derart ausgestaltetes Steckerteil auf einfache Weise vom Bediener mit einer Hand in eine zugeordnete Steckeraufnahme eingesetzt werden kann, wobei praktisch keine Gefahr besteht, dass das Steckerteil verkantet. Darüber hinaus besteht bei einem derart ausgestalteten Steckerteil praktisch keine Gefahr, dass sich die Rastverbindung zwischen dem Stecknippel und der Steckeraufnahme unbeabsichtigt löst. Selbst bei Auftreten erheblicher Querbelastungen und insbesondere auch bei Auftreten erheblicher Wechselbelastungen sowohl in axialer Richtung als auch in radialer Richtung bezogen auf die Längsachse des Steckerteils besteht praktisch keine Gefahr, dass sich die Verbindung zwischen dem Steckerteil und dem Buchsenteil unbeabsichtigt löst.

Die Gefahr, dass das Steckerteil beim Einsetzen in die Steckeraufnahme verkantet, wird unter anderem dadurch minimiert, dass zusätzlich zu einem ersten Gleitführungsabschnitt mit einem ersten Außendurchmesser ein zweiter Gleitführungsabschnitt zum Einsatz kommt, dessen Außendurchmesser mindestens das 1,25-fache des Außendurchmessers des ersten Gleitführungsabschnitts beträgt. Insbesondere kann vorgesehen sein, dass der Außendurchmesser des zweiten Gleitführungsabschnitts mindestens das 1,3-fache des Außendurchmessers des ersten Gleitführungsabschnitts beträgt. Der erste Gleitführungsabschnitt kann beispielsweise einen Außendurchmesser von 12 mm aufweisen und der zweite Gleitführungsabschnitt kann beispielsweise einen Außendurchmesser von 16 mm aufweisen.

Eine zum erfindungsgemäßen Steckerteil passende Steckeraufnahme weist einen ersten Aufnahmeabschnitt auf, der komplementär zum ersten Gleitführungsabschnitt des Steckerteils ausgestaltet ist, sowie einen zweiten Aufnahmeabschnitt, der komplementär zum zweiten Gleitführungsabschnitt des Steckerteils ausgestaltet ist. Beim Einführen des Stecknippels in die Steckeraufnahme kann der erste Gleitführungsabschnitt zunächst mit radialem Abstand durch den zweiten Aufnahmeabschnitt der Steckeraufnahme hindurchgeführt werden, und anschließend kann der Stecknippel mit seinem ersten Gleitführungsabschnitt in den ersten Aufnahmeabschnitt der Steckeraufnahme eingeführt werden. Bevorzugt taucht der zweite Gleitführungsabschnitt zu dem Zeitpunkt in den zweiten Aufnahmeabschnitt ein, zu dem der erste Gleitführungsabschnitt in den ersten Aufnahmeabschnitt eintaucht, so dass beim weiteren Einführen des Stecknippels in die Steckeraufnahme der erste Gleitführungsabschnitt an der Innenseite des ersten Aufnahmeabschnitts und der zweite Gleitführungsabschnitt an der Innenseite des zweiten Aufnahmeabschnitts entlanggleitet, bis der am ersten Gleitführungsabschnitt angeordnete Dichtring seine Dichtstellung erreicht und die am zweiten Gleitführungsabschnitt angeordnete Verriegelungsnut ihre Verriegelungsstellung erreicht, in der die parallel zueinander ausgerichteten, einander diametral gegenüberliegenden, federbelasteten zylindrischen Verriegelungsstifte des Buchsenteils in die Verriegelungsnut einrasten.

Der Abstand zwischen der Mitte der den Dichtring aufnehmenden Dichtringnut und der Mitte der die beiden Verriegelungsstifte aufnehmenden Verriegelungsnut beträgt mindestens das 1,5-fache des Außendurchmessers des ersten Gleitführungsabschnitts. Insbesondere im Falle einer Querbelastung stützt sich der erste Gleitführungsabschnitt zumindest im Bereich der Dichtringnut an der Innenseite des komplementär ausgestalteten Aufnahmeabschnitts der Steckeraufnahme ab und der zweite Gleitführungsabschnitt stützt sich zumindest im Bereich der Verriegelungsnut an der Innenseite des komplementär ausgestalteten zweiten Aufnahmeabschnitts der Steckeraufnahme ab. Das erfindungsgemäße Steckerteil stützt sich somit zuverlässig an zwei in axialer Richtung zueinander beabstandeten Stützbereichen an der Steckeraufnahme des Buchsenteils ab. Der Abstand zwischen den beiden Stützbereichen beträgt mindestens das Anderthalbfache des Außendurchmessers des ersten Gleitführungsabschnitts. Der verhältnismäßig große Abstand verleiht der Verbindung zwischen dem Steckerteil und dem Buchsenteil eine hohe mechanische Stabilität, so dass sich das Steckerteil bei auftretenden Querbelastungen nicht unbeabsichtigt vom Buchsenteil löst.

Der erste Gleitführungsabschnitt bildet einen ersten Gleitführungsbereich und einen zweiten Gleitführungsbereich aus, wobei der erste Gleitführungsbereich auf der dem freien Ende des Stecknippels zugewandten Seite der Dichtringnut angeordnet ist und wobei der zweite Gleitführungsbereich auf der dem freien Ende des Stecknippels abgewandten Seite der Dichtringnut angeordnet ist. Der erste Gleitführungsabschnitt erstreckt sich zu beiden Seiten der Dichtringnut, wobei der erste Gleitführungsabschnitt auf der dem freien Ende des Stecknippels zugewandten Seite der Dichtringnut einen ersten Gleitführungsbereich und auf der gegenüberliegenden Seite der Dichtringnut einen zweiten Gleitführungsbereich ausbildet. Die beiden Gleitführungsbereiche sind jeweils kreiszylindrisch ausgestaltet und weisen denselben Außendurchmesser auf. Beim Einsetzen des Stecknippels in eine zugeordnete Steckeraufnahme kommen die beiden Gleitführungsbereiche nacheinander an der Innenseite des zugeordneten ersten Aufnahmeabschnitts der Steckeraufnahme zur Anlage.

Der zweite Gleitführungsabschnitt bildet einen dritten Gleitführungsbereich und einen vierten Gleitführungsbereich aus, wobei der dritte Gleitführungsbereich auf der dem freien Ende des Stecknippels zugewandten Seite der Verriegelungsnut angeordnet ist und wobei der vierte Gleitführungsbereich auf der dem freien Ende des Stecknippels abgewandten Seite der Verriegelungsnut angeordnet ist. Der zweite Gleitführungsabschnitt erstreckt sich zu beiden Seiten der Verriegelungsnut, die Verriegelungsnut ist also in axialer Richtung weder unmittelbar an dem dem freien Ende des Stecknippels zugewandten vorderen Ende des zweiten Gleitführungsabschnitts noch an dem dem freien Ende des Stecknippels abgewandten hinteren Ende des zweiten Gleitführungsabschnitts angeordnet. Der zweite Gleitführungsabschnitt bildet auf der dem freien Ende des Stecknippels zugewandten Seite der Verriegelungsnut einen dritten Gleitführungsbereich und auf der gegenüberliegenden Seite der Verriegelungsnut einen vierten Gleitführungsbereich aus. Beim Einstecken des Stecknippels in die zugeordnete Steckeraufnahme trifft der dritte Gleitführungsbereich auf den zugeordneten zweiten Aufnahmeabschnitt der Steckeraufnahme, beim weiteren Einsetzen des Stecknippels in die Steckeraufnahme gleitet dann der dritte Gleitführungsbereich an der Innenseite des zweiten Aufnahmeabschnitts entlang, bis dann auch die Verriegelungsnut in den zweiten Aufnahmeabschnitt eintaucht und anschließend auch der vierte Gleitführungsbereich an der Innenseite des zweiten Aufnahmeabschnitts entlanggleitet, bis die Verriegelungsstifte in die Verriegelungsnut einrasten.

Die Verriegelungsnut weist gemäß der Erfindung einen sich an den dritten Gleitführungsbereich anschließenden konischen Wandabschnitt auf, dessen Durchmesser sich mit zunehmendem Abstand vom dritten Gleitführungsbereich verringert und an den sich ein bogenförmiger Wandabschnitt der Verriegelungsnut anschließt. Die Bereitstellung eines sich an den dritten Gleitführungsbereich in axialer Richtung anschließenden konischen Wandabschnitts erleichtert das Einrasten der Verriegelungsstifte in die Verriegelungsnut.

Bevorzugt ist der sich an den konischen Wandabschnitt in axialer Richtung anschließende bogenförmige Wandabschnitt der Verriegelungsnut im Querschnitt kreisbogenförmig ausgestaltet. Dies ermöglicht bevorzugt eine zumindest bereichsweise flächige Anlage der zylindrischen Verriegelungsstifte an der im Querschnitt kreisbogenförmigen Wand der Verriegelungsnut.

Der Konuswinkel des konischen Wandabschnitts beträgt mindestens 90°, insbesondere mehr als 90°. Als Konuswinkel wird hierbei der Öffnungswinkel des konischen Wandabschnitts bezeichnet. Der konische Wandabschnitt bildet einen kegelstumpfförmigen Bereich der Verriegelungsnut aus. Bei einem Konuswinkel von mehr als 90° ist die Mantelfläche des Kegelstumpfes in einem Winkel von mehr als 45° zur Längsachse des Steckerteils geneigt.

Das erfindungsgemäße Steckerteil zeichnet sich durch eine einfache Handhabung beim Herstellen einer flüssigkeitsdichten Verbindung mit einem Buchsenteil aus, und es hat darüber hinaus den Vorteil, dass sich das Steckerteil nicht unbeabsichtigt vom Buchsenteil löst.

Bevorzugt beträgt der Abstand zwischen der Mitte der Dichtringnut und der Mitte der Verriegelungsnut mindestens das Doppelte des Außendurchmessers des ersten Gleitführungsabschnitts. Der genannte Abstand beträgt beispielsweise das 2,0-fache bis 2,5-fache des Außendurchmessers des ersten Gleitführungsabschnitts.

Von Vorteil ist es, wenn der Außendurchmesser des zweiten Gleitführungsabschnitts maximal das Anderthalbfache des Außendurchmessers des ersten Gleitführungsabschnitts beträgt. Ein verhältnismäßig großer Außendurchmesser des zweiten Gleitführungsabschnitts hat zur Folge, dass die in der Raststellung in die Verriegelungsnut einrastenden Verriegelungsstifte des Buchsenteils eine erhebliche Länge aufweisen müssen, da sie mit ihren freien Enden aus der Verriegelungsnut herausragen. Je länger die Verriegelungsstifte sind, desto größer ist das Risiko, dass sie sich verbiegen, wenn das Steckerteil beispielsweise aufgrund hoher Druckspitzen, mit starken axialen Kräften belastet wird.

Der Außendurchmesser des zweiten Gleitführungsabschnitts kann andererseits auch nicht beliebig klein gewählt werden, da ansonsten die Rastverbindung zwischen den Verriegelungsstiften und der Verriegelungsnut nicht mechanisch stabil ausgestaltet werden kann. Darüber hinaus muss dafür Sorge getragen werden, dass der Außendurchmesser des zweiten Gleitführungsabschnitts größer ist als der Außendurchmesser des ersten Gleitführungsabschnitts, da ansonsten die Gefahr besteht, dass das Steckerteil verkantet. Es ist deshalb bei einer vorteilhaften Ausführungsform der Erfindung vorgesehen, dass der Außendurchmesser des zweiten Gleitführungsabschnitts mindestens das 1,25-fache und maximal das 1,5-fache des Außendurchmessers des ersten Gleitführungsabschnitts beträgt.

Bei einer besonders bevorzugten Ausgestaltung der Erfindung ist der Außendurchmesser des zweiten Gleitführungsabschnitts um ein Drittel größer als der Außendurchmesser des ersten Gleitführungsabschnitts.

Wie bereits erwähnt, wird das Steckerteil in Längsrichtung von einem Durchgangskanal für unter Hochdruck stehende Flüssigkeit durchgriffen. Von Vorteil ist es, wenn der Durchgangskanal zumindest im Bereich des Stecknippels einen zylindrischen Strömungsquerschnitt aufweist, wobei der Innendurchmesser des Durchgangskanals halb so groß ist wie der Außendurchmesser des ersten Gleitführungsabschnitts. Derartige Durchmesserverhältnisse ermöglichen es auf konstruktiv einfache Weise, im ersten Gleitführungsabschnitt die Dichtringnut anzuordnen, ohne dass dadurch die mechanische Stabilität des Steckerteils beeinträchtigt wird. Der Innendurchmesser des Durchgangskanals kann im Bereich des Stecknippels beispielsweise 6 mm betragen.

Bei einer vorteilhaften Ausgestaltung der Erfindung weist der Stecknippel zwischen dem ersten Gleitführungsabschnitt und dem zweiten Gleitführungsabschnitt einen Übergangsabschnitt auf. Wie erwähnt, unterscheiden sich die Außendurchmesser des ersten und des zweiten Gleitführungsabschnitts. Die Bereitstellung des Übergangsabschnitts ermöglicht es, den Außendurchmesser des ersten Gleitführungsabschnitts mit zunehmendem Abstand zum freien Ende des Stecknippels an den Außendurchmesser des zweiten Gleitführungsabschnitts anzupassen. Innerhalb des sich über eine gewisse axiale Länge erstreckenden Übergangsabschnitts ändert sich somit der Außendurchmesser des Stecknippels.

Günstigerweise vergrößert sich der Außendurchmesser des Übergangsabschnitts kontinuierlich mit zunehmendem Abstand zum freien Ende des Stecknippels.

Insbesondere kann vorgesehen sein, dass der Übergangsabschnitt konisch ausgestaltet ist.

Von Vorteil ist es, wenn der Stecknippel an seinem freien Ende eine Stirnfläche aufweist, deren Abstand zu dem der Stirnfläche abgewandten Ende des Übergangsabschnitts mindestens doppelt so groß ist wie der Außendurchmesser des ersten Gleitführungsabschnitts. Der Übergangsabschnitt schließt sich in der dem freien Ende des Stecknippels abgewandten Richtung an den ersten Gleitführungsabschnitt an und erstreckt sich bis zum zweiten Gleitführungsabschnitt. Gemeinsam weisen der erste Gleitführungsabschnitt und der Übergangsabschnitt vorteilhafterweise eine Länge bezogen auf die Längsachse des Steckerteils auf, die mindestens das 2-fache des Außendurchmessers des ersten Gleitführungsabschnitts beträgt.

Es kann beispielsweise vorgesehen sein, dass der Abstand zwischen der Stirnfläche des Stecknippels und dem der Stirnfläche abgewandten Ende des Übergangsabschnitts ungefähr das 2,5-fache des Außendurchmessers des ersten Gleitführungsabschnitts beträgt.

Die Länge des Übergangsabschnitts bezogen auf die Längsachse des Steckerteils ist günstigerweise deutlich geringer als die Länge des ersten Gleitführungsabschnitts. Es kann beispielsweise vorgesehen sein, dass der erste Gleitführungsabschnitt mindestens dreimal so lang ist wie der Übergangsabschnitt.

Günstig ist es, wenn der erste Gleitführungsbereich länger ist als der zweite Gleitführungsbereich. Dies hat den Vorteil, dass der Stecknippel beim Einstecken in die Steckeraufnahme zunächst mit dem verhältnismäßig langen ersten Gleitführungsbereich in den zugeordneten ersten Aufnahmeabschnitt der Steckeraufnahme eingeführt werden kann, anschließend taucht auch der zwischen dem ersten Gleitführungsbereich und dem zweiten Gleitführungsbereich angeordnete Dichtring in den ersten Aufnahmeabschnitt der Steckeraufnahme ein, und beim weiteren Einsetzen des Stecknippels in die Steckeraufnahme taucht auch der zweite Gleitführungsbereich in den ersten Aufnahmeabschnitt der Steckeraufnahme ein.

Günstig ist es, wenn der dritte Gleitführungsbereich länger ist als der vierte Gleitführungsbereich.

Die zylindrischen Verriegelungsstifte des Buchsenteils sind günstigerweise in Verriegelungsschlitzen eines Aufnahmekörpers des Buchsenteils verschiebbar gehalten, wobei die Verriegelungsschlitze in einem Winkel von etwa 45° zur Längsachse der Steckeraufnahme geneigt sind. Dies erleichtert das Einrasten der Verriegelungsstifte in die Verriegelungsnut.

Weist der konische Wandabschnitt der Verriegelungsnut bei einer Neigung der Verriegelungsschlitze von etwa 45° zur Längsachse der Steckeraufnahme einen Konuswinkel von mehr als 90° auf, so hat dies zur Folge, dass der konische Wandabschnitt der Verriegelungsnut in Richtung auf den gegenüberliegenden Wandabschnitt der Verriegelungsschlitze geneigt ist. Dies hat den Vorteil, dass die Verriegelungsstifte bei einer axialen Druckbelastung des Steckerteils zwischen dem konischen Wandabschnitt der Verriegelungsnut und dem gegenüberliegenden Wandabschnitt der Verriegelungsstifte eingeklemmt werden. Die Verriegelungsstifte können daher bei einer auf das Steckerteil einwirkenden axialen Druckbelastung nicht aus der Verriegelungsnut herausgeschoben werden. Ein Lösen der Rastverbindung zwischen dem Steckerteil und dem Buchsenteil ist vielmehr nur dann möglich, wenn das Steckerteil keiner axialen Druckbelastung unterliegt.

Günstigerweise beträgt der Konuswinkel des konischen Wandabschnitts der Verriegelungsnut 100° bis 120°. Insbesondere kann der Konuswinkel 110° betragen.

Von Vorteil ist es, wenn sich der im Querschnitt bogenförmige Wandabschnitt der Verriegelungsnut ausgehend vom konischen Wandabschnitt bis zum vierten Gleitführungsbereich erstreckt. Bei einer derartigen Ausgestaltung bildet der im Querschnitt bogenförmige, insbesondere kreisbogenförmige Wandabschnitt der Verriegelungsnut eine Hohlkehle aus, an die sich in Richtung auf das freie Ende des Stecknippels der konische Wandabschnitt anschließt.

Günstig ist es, wenn der im Querschnitt bogenförmige Wandabschnitt mit einer bezogen auf die Längsachse des Steckerteils radial ausgerichteten Tangente in den vierten Gleitführungsbereich übergeht.

Wie eingangs erwähnt, betrifft die Erfindung auch eine Steckkupplung für Flüssigkeitsleitungen einer Hochdruckreinigungseinrichtung mit einem Steckerteil der voranstehend genannten Art und mit einem Buchsenteil. Das Buchsenteil weist einen Aufnahmekörper auf mit einer Steckeraufnahme, in die der Stecknippel unter Ausbildung einer flüssigkeitsdichten Verbindung einsteckbar ist und die mit dem Stecknippel lösbar verrastbar ist, wobei der Aufnahmekörper zwei zueinander diametral gegenüberliegende, schräg zur Längsachse der Steckeraufnahme ausgerichtete Verriegelungsschlitze aufweist, in denen jeweils ein Verriegelungsstift verschiebbar angeordnet ist, wobei die Verriegelungsstifte mittels einer am Aufnahmekörper in axialer Richtung verschiebbaren Schiebehülse entgegen einer federelastischen Rückstellkraft aus einer Verriegelungsstellung in eine Freigabestellung bewegbar sind, wobei sie in der Verriegelungsstellung in die Verriegelungsnut des Stecknippels eintauchen und in der Freigabestellung die Verriegelungsnut freigeben, wobei die Steckeraufnahme einen ersten kreiszylindrischen Aufnahmeabschnitt aufweist, der eine Dichtfläche ausbildet und der den ersten Gleitführungsabschnitt des Stecknippels formschlüssig aufnimmt, sowie einen zweiten kreiszylindrischen Aufnahmeabschnitt, in den die Verriegelungsschlitze einmünden und der den zweiten Gleitführungsabschnitt des Stecknippels formschlüssig aufnimmt.

Zur Herstellung einer flüssigkeitsdichten und lösbaren Verbindung kann der Stecknippel des Steckerteils in die zugeordnete Steckeraufnahme des Aufnahmekörpers des Buchsenteils eingesetzt werden. Die Steckeraufnahme weist einen ersten Aufnahmeabschnitt auf, dessen Innendurchmesser an den Außendurchmesser des ersten Gleitführungsabschnitts des Stecknippels angepasst ist. Außerdem weist die Steckeraufnahme einen zweiten Aufnahmeabschnitt auf, dessen Innendurchmesser an den Außendurchmesser des zweiten Gleitführungsabschnitts des Stecknippels angepasst ist. Der erste Aufnahmeabschnitt bildet eine Dichtfläche aus, an die der im ersten Gleitführungsabschnitt angeordnete Dichtring flüssigkeitsdicht anlegbar ist. In den zweiten Aufnahmeabschnitt münden die Verriegelungsschlitze, die jeweils einen zylindrischen Verriegelungsstift aufnehmen. Die Verriegelungsstifte werden von einem Federelement mit einer Federkraft beaufschlagt. Solange der Stecknippel nicht in die Steckeraufnahme eingesetzt ist, nehmen die Verriegelungsstifte aufgrund der auf sie einwirkenden Federkraft eine Verriegelungsstellung ein. Beim Einsetzen des Stecknippels in die Steckeraufnahme kann zunächst der erste Gleitführungsabschnitt durch den zweiten Aufnahmeabschnitt der Steckeraufnahme hindurchgeführt werden. Der erste Gleitführungsabschnitt trifft anschließend auf den ersten Aufnahmeabschnitt, so dass er an der Innenseite des ersten Aufnahmeabschnitts entlanggleiten kann, und der zweite Gleitführungsabschnitt kann an der Innenseite des zweiten Aufnahmeabschnitts entlanggleiten. Beim Einsetzen des Stecknippels in die Steckeraufnahme werden die zunächst ihre Verriegelungsstellung einnehmenden Verriegelungsstifte entgegen der auf sie einwirkenden federelastischen Rückstellkraft auseinandergespreizt, so dass sie an der Außenseite des Stecknippels entlanggleiten können, und bei Positionierung der Verriegelungsnut in Höhe des Mündungsbereiches der Verriegelungsschlitze rasten die Verriegelungsstifte in die Verriegelungsnut ein.

Soll die Rastverbindung zwischen dem Steckerteil und dem Buchsenteil gelöst werden, so können hierzu die Verriegelungsstifte vom Benutzer mit Hilfe einer in axialer Richtung verschiebbaren Schiebehülse in ihre Freigabestellung überführt werden, in der sie die Verriegelungsnut freigeben.

Von besonderem Vorteil ist es, wenn beim Einstecken des Stecknippels in die Steckaufnahme gleichzeitig der erste Gleitführungsabschnitt am ersten Aufnahmeabschnitt und der zweite Gleitführungsabschnitt am zweiten Aufnahmeabschnitt zur Anlage gelangt. Dadurch kann ein Verkanten des Stecknippels beim Einsetzen in die Steckeraufnahme besonders zuverlässig vermieden werden, da der Stecknippel an zwei axial zueinander beabstandeten Bereichen der Steckeraufnahme anliegt und daher fluchtend zur Steckeraufnahme ausgerichtet ist, wenn der erste Gleitführungsabschnitt in den ersten Aufnahmeabschnitt und gleichzeitig der zweite Gleitführungsabschnitt in den zweiten Aufnahmeabschnitt eintritt.

Zwischen dem kreiszylindrischen ersten Aufnahmeabschnitt und dem kreiszylindrischen zweiten Aufnahmeabschnitt weist die Steckeraufnahme bei einer vorteilhaften Ausgestaltung der Erfindung einen konischen Führungsabschnitt auf, über den sich der Innendurchmesser der Steckeraufnahme ausgehend vom zweiten Aufnahmeabschnitt in Richtung auf den ersten Aufnahmeabschnitt kontinuierlich verringert. Der konische Führungsabschnitt dient der Führung des Stecknippels im Bereich zwischen dem zweiten Aufnahmeabschnitt und dem ersten Aufnahmeabschnitt. Das freie Ende des Stecknippels kann beim Einsetzen in die Steckeraufnahme an der Innenseite des konischen Führungsabschnitts entlanggleiten, so dass sich die Ausrichtung des Stecknippels an die Ausrichtung des ersten Aufnahmeabschnitts anpasst.

Günstig ist es, wenn jeder Verriegelungsschlitz einen Schlitzwandabschnitt aufweist, an dem ein Verriegelungsstift in der Verriegelungsstellung mit einem aus der zugeordneten Verriegelungsnut herausragenden Stiftbereich anliegt, wobei der Schlitzwandabschnitt einen Neigungswinkel zur Längsachse des Stecknippels aufweist, der gleich groß oder kleiner ist als der Neigungswinkel eines dem Schlitzwandabschnitt gegenüberliegenden konischen Wandabschnitts der Verriegelungsnut. Wie voranstehend bereits erläutert, weist die Verriegelungsnut bei einer vorteilhaften Ausgestaltung des Steckerteils einen konischen Wandabschnitt auf. Der Neigungswinkel des konischen Wandabschnitts bezogen auf die Längsachse des Steckerteils ist günstigerweise mindestens so groß wie der Neigungswinkel eines Schlitzwandabschnitts, an dem ein Verriegelungsstift in der Verriegelungsstellung mit einem aus der Verriegelungsnut herausragenden Stiftbereich anliegt. In der Verriegelungsstellung nehmen die Verriegelungsstifte somit jeweils eine Position zwischen einem konischen Wandabschnitt der Verriegelungsnut und einem Schlitzwandabschnitt eines Verriegelungsschlitzes ein.

Bevorzugt ist der Neigungswinkel des konischen Wandabschnitts bezogen auf die Längsachse des Steckerteils größer als der Neigungswinkel des gegenüberliegenden Schlitzwandabschnitts. Bei einer derartigen Ausgestaltung wird der Verriegelungsstift zwischen dem konischen Wandabschnitt und dem gegenüberliegenden Schlitzwandabschnitt eingekeilt, so dass er bei einer axialen Druckbelastung des Steckerteils nicht aus der Verriegelungsnut entweichen kann. Die axiale Druckbelastung des Steckerteils ist insbesondere auf dessen Stirnseite gerichtet und versucht, den Stecknippel aus der Steckeraufnahme herauszudrücken. Da die Verriegelungsstifte jedoch unter dem Einfluss der axialen Druckbelastung zwischen dem konischen Wandabschnitt der Verriegelungsnut und dem gegenüberliegenden Schlitzwandabschnitt der Verriegelungsschlitze eingeklemmt werden, kann die Rastverbindung zwischen dem Steckerteil und dem Buchsenteil unter dem Einfluss der axialen Druckbelastung nicht ohne Weiteres gelöst werden.

Der Neigungswinkel der Schlitzwandabschnitte der Verriegelungsschlitze bezogen auf die Längsachse des Stecknippels beträgt bei einer vorteilhaften Ausgestaltung der Erfindung maximal 45°, und der Neigungswinkel des konischen Wandabschnitts zur Längsachse des Stecknippels beträgt bevorzugt mindestens 45°, insbesondere mindestens 50°, beispielsweise 55°.

Die nachfolgende Beschreibung einer vorteilhaften Ausführungsform der Erfindung dient im Zusammenhang mit der Zeichnung der näheren Erläuterung. Es zeigen:
- Figur 1:: eine Längsschnittansicht einer Steckkupplung für Flüssigkeitsleitungen einer Hochdruckreinigungseinrichtung, wobei ein Steckerteil in ein Buchsenteil eingesetzt und mit dem Buchsenteil verrastet ist;

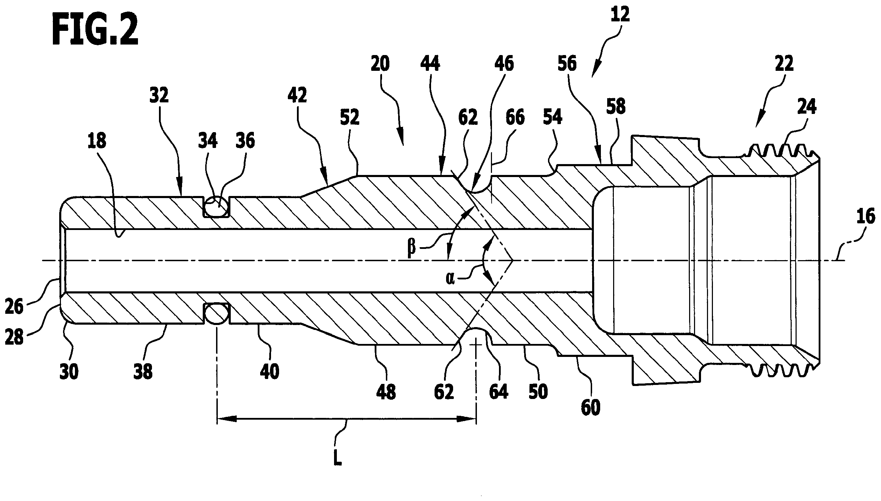

- Figur 2:: eine Längsschnittansicht des Steckerteils aus Figur 1;
- Figur 3:: eine Längsschnittansicht des Buchsenteils aus Figur 1;
- Figur 4:: eine perspektivische Darstellung eines Aufnahmekörpers des Buchsenteils aus Figur 1;
- Figur 5:: eine Darstellung des Zusammenwirkens von Steckerteil und Aufnahmekörper zur Herstellung einer Rastverbindung;
- Figur 6:: eine Längsschnittansicht der Steckkupplung aus Figur 1, wobei das Steckerteil eine erste Zwischenstellung beim Einstecken in eine Steckeraufnahme des Aufnahmekörpers aufweist;
- Figur 7:: eine Längsschnittansicht entsprechend Figur 6, wobei das Steckerteil eine zweite Zwischenstellung beim Einstecken in die Steckeraufnahme einnimmt;
- Figur 8:: eine Längsschnittansicht entsprechend Figur 6, wobei das Steckerteil eine dritte Zwischenstellung beim Einstecken in die Steckeraufnahme einnimmt.

In der Zeichnung ist eine vorteilhafte Ausführungsform einer erfindungsgemäßen Steckkupplung für Flüssigkeitsleitungen einer Hochdruckreinigungseinrichtung schematisch dargestellt und insgesamt mit dem Bezugszeichen 10 belegt. Die Steckkupplung 10 weist ein Steckerteil 12 und ein Buchsenteil 14 auf. Das Steckerteil 12 und das Buchsenteil 14 können auf einfache Weise ohne Einsatz eines speziellen Werkzeugs flüssigkeitsdicht miteinander verbunden und bei Bedarf ohne spezielles Werkzeug auch wieder voneinander getrennt werden.

Das Steckerteil 12 weist eine Längsachse 16 auf und wird koaxial zur Längsachse 16 von einem Durchgangskanal 18 durchgriffen. Durch den Durchgangskanal 18 kann unter Hochdruck stehende Flüssigkeit, insbesondere unter Hochdruck stehendes Wasser, hindurchströmen. Die Flüssigkeit kann einen Druck von mehr als 100 bar, insbesondere ein Druck von mehr als 150 bar aufweisen. Es kann vorgesehen sein, dass die Flüssigkeit einen Druck von mehr als 300 bar aufweist.

Das Steckerteil 12 bildet einen Stecknippel 20 aus, der einstückig mit einem Steckeranschlussteil 22 verbunden ist. Das Steckeranschlussteil 22 weist ein Außengewinde 24 auf und kann mit einer Flüssigkeitsleitung, beispielsweise mit einer Anschlussarmatur eines Hochdruckschlauchs oder mit einem Flüssigkeitsabgabeorgan, insbesondere mit einer Sprühlanze flüssigkeitsdicht verschraubt werden.

Der Stecknippel 20 ist bezogen auf die Längsachse 16 rotationssymmetrisch ausgestaltet und bildet mit seinem dem Steckeranschlussteil 22 abgewandten freien Ende 26 eine Stirnfläche 28 aus, die über einen abgerundeten Erweiterungsbereich 30 in einen kreiszylindrischen ersten Gleitführungsabschnitt 32 übergeht. Innerhalb des ersten Gleitführungsabschnitts 32 ist eine im Querschnitt U-förmige Dichtringnut 34 angeordnet, die einen Dichtring 36 aufnimmt. Auf der der Stirnfläche 28 zugewandten Seite der Dichtringnut 34 bildet der erste Gleitführungsabschnitt 32 einen ersten Gleitführungsbereich 38 aus, und auf der der Stirnfläche 28 abgewandten Seite der Dichtringnut 34 bildet der erste Gleitführungsabschnitt 32 einen zweiten Gleitführungsbereich 40 aus. Der Außendurchmesser des ersten kreiszylindrischen Gleitführungsbereichs 38 ist identisch mit dem Außendurchmesser des zweiten kreiszylindrischen Gleitführungsbereichs 40. Die Länge des ersten Gleitführungsbereichs 38 ist größer als die Länge des zweiten Gleitführungsbereichs 40.

An den zweiten Gleitführungsbereich 40 schließt sich ein konisch ausgestalteter Übergangsabschnitt 42 an, dessen Außendurchmesser sich mit zunehmendem Abstand von der Stirnfläche 28 kontinuierlich erweitert.

An den Übergangsabschnitt 42 schließt sich ein zweiter kreiszylindrischer Gleitführungsabschnitt 44 an, dessen Außendurchmesser um ein Drittel größer ist als der Außendurchmesser des ersten Gleitführungsabschnitts 32.

Innerhalb des zweiten Gleitführungsabschnitts 44 ist eine Verriegelungsnut 46 angeordnet, die sich über den gesamten Umfang des zweiten Gleitführungsabschnitts 44 erstreckt. Der Abstand zwischen der Mitte der Dichtringnut 34 und der Mitte der Verriegelungsnut 46 beträgt im dargestellten Ausführungsbeispiel ungefähr das 2,0- bis 2,1-fache des Außendurchmessers des ersten Gleitführungsabschnitts 32.

Auf der der Stirnfläche 28 zugewandten Seite der Verriegelungsnut 46 bildet der zweite Gleitführungsabschnitt 44 einen dritten kreiszylindrischen Gleitführungsbereich 48 aus, und auf der der Stirnfläche 28 abgewandten Seite der Verriegelungsnut 46 bildet der zweite Gleitführungsabschnitt 44 einen vierten kreiszylindrischen Gleitführungsbereich 50 aus. Der Außendurchmesser des dritten Gleitführungsbereichs 48 ist identisch mit dem Außendurchmesser des vierten Gleitführungsbereichs 50. Die Länge des dritten Gleitführungsbereichs 48 ist größer als die Länge des Gleitführungsbereichs 50.

Der Übergangsabschnitt 42 erstreckt sich vom zweiten Gleitführungsbereich 40 bis zum dritten Gleitführungsbereich 48. Der Abstand, den die Stirnfläche 28 zu dem der Stirnfläche 28 abgewandten Ende 52 des Übergangsabschnitts 42 aufweist, beträgt im dargestellten Ausführungsbeispiel ungefähr das 2,5-fache des Außendurchmessers des ersten Gleitführungsabschnitts 32.

An den zweiten Gleitführungsabschnitt 44 schließt sich in der dem freien Ende 26 abgewandten Richtung über eine radial nach außen weisende Schulter 54 ein Steckerabschnitt 56 an, der zwei einander gegenüberliegende, parallel zueinander ausgerichtete abgeflachte Bereiche 58, 60 aufweist.

An den Steckerabschnitt 56 schließt sich in der der Stirnfläche 28 abgewandten Richtung das Steckeranschlussteil 22 an.

Die Verriegelungsnut 46 weist einen konischen Wandabschnitt 62 auf, der sich unmittelbar an den dritten Gleitführungsbereich 48 anschließt und der einen Konuswinkel α von etwa 110° aufweist. Bezogen auf die Längsachse 16 weist der konische Wandabschnitt 62 einen Neigungswinkel β von etwa 55° auf.

An den konischen Wandabschnitt 62 schließt sich ein im Querschnitt kreisbogenförmiger Wandabschnitt 64 der Verriegelungsnut 46 an. Der kreisbogenförmige Wandabschnitt 64 erstreckt sich vom konischen Wandabschnitt 62 bis zum vierten Gleitführungsbereich 50. Der kreisbogenförmige Wandabschnitt 64 geht mit einer senkrecht zur Längsachse 16, das heißt in radialer Richtung ausgerichteten Tangente 66 in den vierten Gleitführungsbereich 50 über.

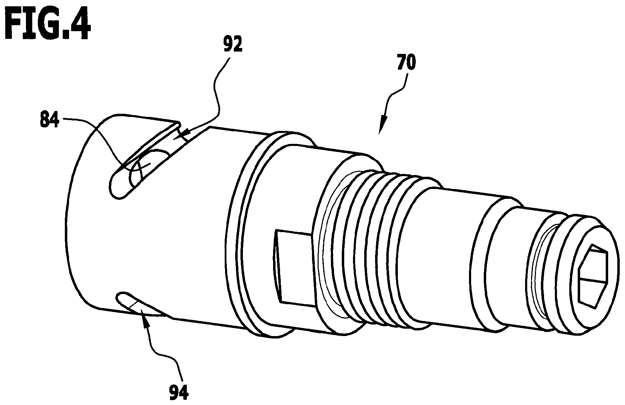

Das Buchsenteil 14 weist einen Aufnahmekörper 70 auf, der in Figur 4 perspektivisch dargestellt ist. Der Aufnahmekörper 70 weist eine Steckeraufnahme 72 auf, in die der Stecknippel 20 zur Herstellung einer flüssigkeitsdichten und lösbaren Verbindung eingesetzt werden kann. An die Steckeraufnahme 72 schließt sich über eine radial nach innen gerichtete Stufe 74 ein Durchlasskanal 76 des Aufnahmekörpers 70 an.

Die Steckeraufnahme 72 weist einen ersten kreiszylindrischen Aufnahmeabschnitt 78 auf, der sich in der dem Durchlasskanal 76 abgewandten Richtung an die Stufe 74 anschließt. An den ersten Aufnahmeabschnitt 78 schließt sich über einen kurzen Zwischenabschnitt 80 ein konischer Führungsabschnitt 82 an, der sich bis zu einem zweiten kreiszylindrischen Aufnahmeabschnitt 84 erstreckt. Der Innendurchmesser des konischen Führungsabschnitts 82 vergrößert sich mit zunehmendem Abstand zum ersten Aufnahmeabschnitt 78. Der zweite Aufnahmeabschnitt 84 erstreckt sich bis zu einem Einführabschnitt 86 der Steckeraufnahme 72. Der Einführabschnitt 86 erstreckt sich bis zu dem dem Durchlasskanal 76 abgewandten Ende 88 des Aufnahmekörpers 70.

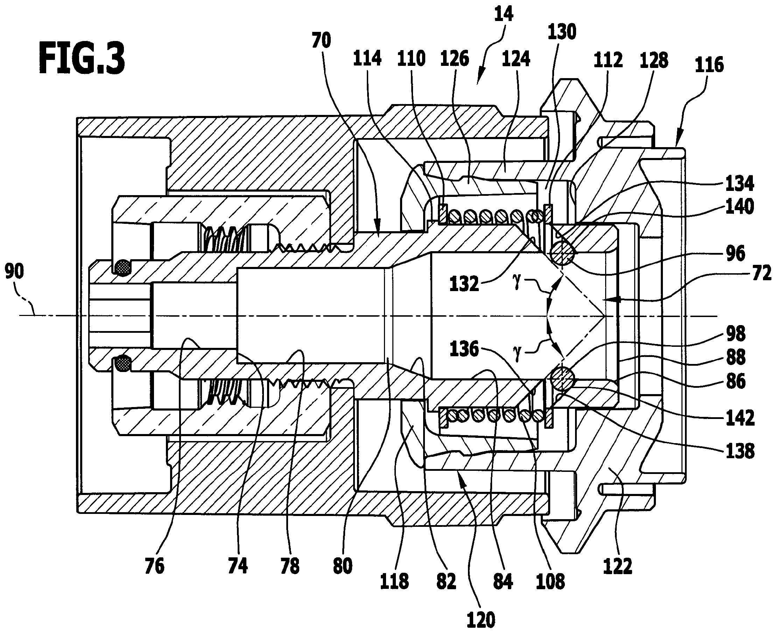

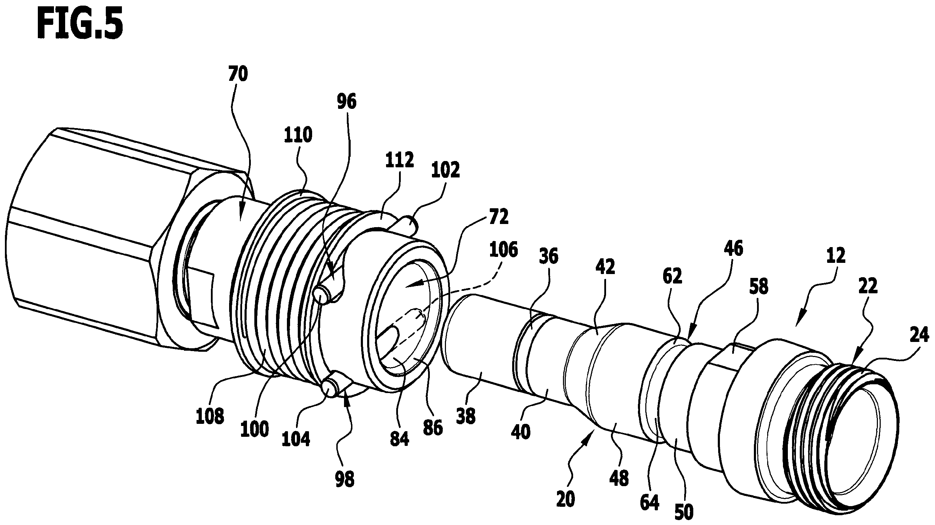

Wie insbesondere aus den Figuren 3 und 4 deutlich wird, weist der Aufnahmekörper 70 zwei schräg zur Längsachse 90 des Aufnahmekörpers 70 ausgerichtete Verriegelungsschlitze 92, 94 auf, die in den zweiten Aufnahmeabschnitt 84 einmünden. In den Verriegelungsschlitzen 92, 94 ist jeweils ein zylindrischer Verriegelungsstift 96, 98 verschiebbar angeordnet. Die Verriegelungsstifte 96, 98 sind parallel zueinander ausgerichtet und liegen einander diametral gegenüber. Mit ihren freien Enden 100, 102 bzw. 104, 106 ragen die Verriegelungsstifte 96, 98 aus den Verriegelungsschlitzen 92, 94 heraus. Dies wird aus Figur 5 deutlich.

Der Aufnahmekörper 70 ist in Höhe des zweiten Aufnahmeabschnitts 84 von einer Schraubenfeder 108 umgeben, die zwischen einer ersten Ringscheibe 110 und einer zweiten Ringscheibe 112 eingespannt ist. Die erste Ringscheibe 110 stützt sich an einer außenseitigen Erweiterung 114 des Aufnahmekörpers 70 ab, und die zweite Ringscheibe 112 stützt sich an den aus dem Aufnahmekörper 70 herausragenden freien Enden 100, 102, 104 und 106 der Verriegelungsstifte 96, 98 ab. Über die zweite Ringscheibe 112 werden die Verriegelungsstifte 96, 98 mit einer Federkraft beaufschlagt, unter deren Wirkung sie ihre in Figur 3 dargestellte Verriegelungsstellung einnehmen, sofern das Steckerteil 12 nicht in die Steckeraufnahme 72 eingesetzt ist.

Am Aufnahmekörper 70 ist außenseitig in Höhe des zweiten Aufnahmeabschnitts 84 eine Schiebehülse 116 in axialer Richtung verschiebbar gelagert. In Figur 5 wurde die Schiebehülse 116 zur Erzielung einer besseren Übersicht ausgeblendet. Die Schiebehülse 116 weist einen hinteren Endabschnitt 118 auf, der die außenseitige Erweiterung 114 des Aufnahmekörpers 70 hintergreift. An den hinteren Endabschnitt 118 schließt sich ein Zylindermantel 120 an, der die Schraubenfeder 108 sowie die beiden Ringscheiben 110, 112 in Umfangsrichtung umgibt, und an den sich ein vorderer Endabschnitt 122 der Schiebehülse 116 anschließt. Der Zylindermantel 120 wird von einer äußeren Mantelwand 124 und einer inneren Mantelwand 126 gebildet, die miteinander verrastet sind. Die äußere Mantelwand 124 ist einstückig mit dem vorderen Endabschnitt 122 verbunden, und die innere Mantelwand 126 ist einstückig mit dem hinteren Endabschnitt 118 verbunden.

Der vordere Endabschnitt 122 bildet eine Bodenwand 128 eines Ringraums 130 aus, der von der Schiebehülse 116 und dem Aufnahmekörper 70 definiert wird und in dem die Schraubenfeder 108 sowie die beiden Ringscheiben 110, 112 angeordnet sind. Die aus den Verriegelungsschlitzen 92, 94 herausragenden freien Enden 100, 102, 104, 106 der Verriegelungsstifte 96, 98 liegen an der Bodenwand 128 an.

Die Verriegelungsstifte 96, 98 können mit Hilfe der Schiebehülse 116 aus ihrer Verriegelungsstellung in eine Freigabestellung verschoben werden. Hierzu kann der Benutzer die Schiebehülse 116 manuell entgegen der Rückstellkraft der Schraubenfeder 108 verschieben, so dass die Verriegelungsstifte 96, 98 in eine Freigabestellung bewegt werden, in der sie einen größeren Abstand zueinander einnehmen als in der Verriegelungsstellung.

Die Verriegelungsschlitze 92, 94 weisen jeweils zwei parallel zueinander ausgerichtete Schlitzwände 132, 134 bzw. 136, 138 auf. Die Schlitzwände sind im dargestellten Ausführungsbeispiel in einem Neigungswinkel γ zur Längsachse 90 des Aufnahmekörpers 70 geneigt. Der Neigungswinkel γ beträgt im dargestellten Ausführungsbeispiel 45°.

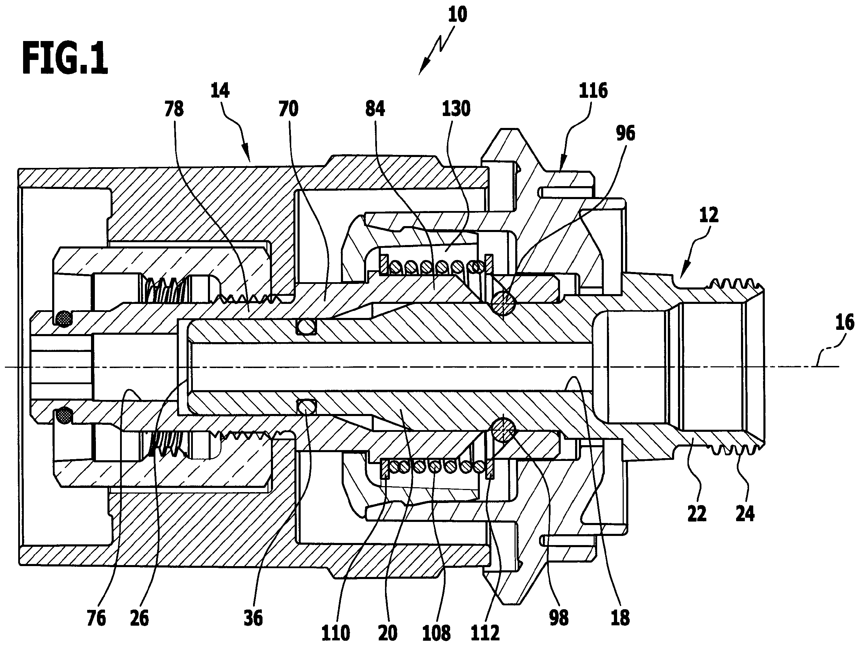

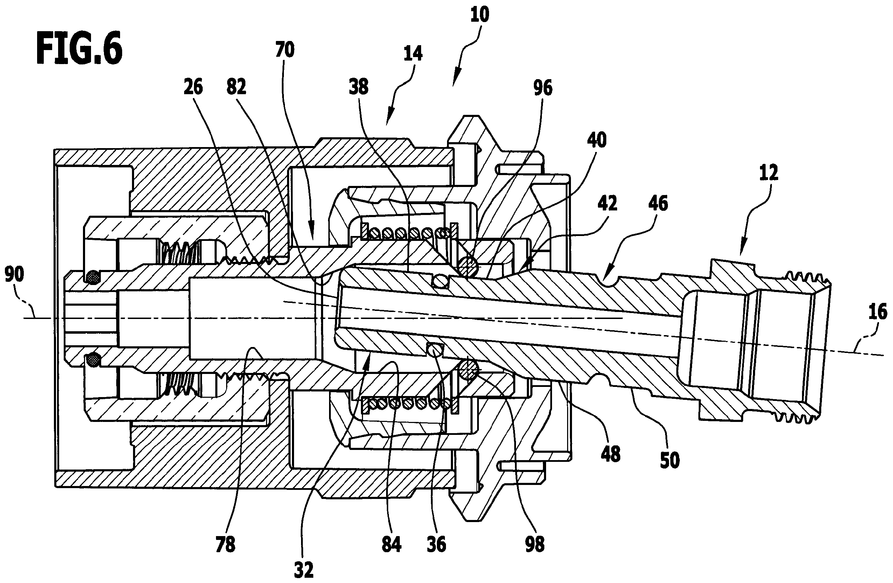

Wie bereits erwähnt, kann der Stecknippel 20 zur Herstellung einer flüssigkeitsdichten und lösbaren Verbindung in die Steckeraufnahme 72 eingesteckt werden. Die Figuren 6, 7 und 8 zeigen verschiedene Zwischenstellungen, die der Stecknippel 20 beim Einsetzen in die Steckeraufnahme 72 einnimmt, und Figur 1 zeigt die Endstellung des Stecknippels 20 nach erfolgtem Einsetzen in die Steckeraufnahme 72. Zunächst kann der erste Gleitführungsabschnitt 32 durch den Einführabschnitt 86 und den sich daran anschließenden zweiten Aufnahmeabschnitt 84 hindurchgeführt werden. Der Außendurchmesser des ersten Gleitführungsabschnitts 32 ist deutlich geringer als der Innendurchmesser des zweiten Aufnahmeabschnitts 84, so dass der Stecknippel 20 auch dann in den zweiten Aufnahmeabschnitt 84 eingesetzt werden kann, wenn die Längsachse 16 des Steckerteils zur Längsachse 90 des Aufnahmekörpers 70 geneigt ist. Dies wird aus Figur 6 deutlich.

Beim weiteren Einsetzen in die Steckeraufnahme 72 trifft das freie Ende 26 des Steckerteils auf den konischen Führungsabschnitt 82 der Steckeraufnahme 72 und kann anschließend am konischen Führungsabschnitt 82 entlanggleiten, wobei sich die Ausrichtung der Längsachse 16 des Steckerteils 12 zunehmend der Ausrichtung der Längsachse 90 des Aufnahmekörpers 70 annähert.

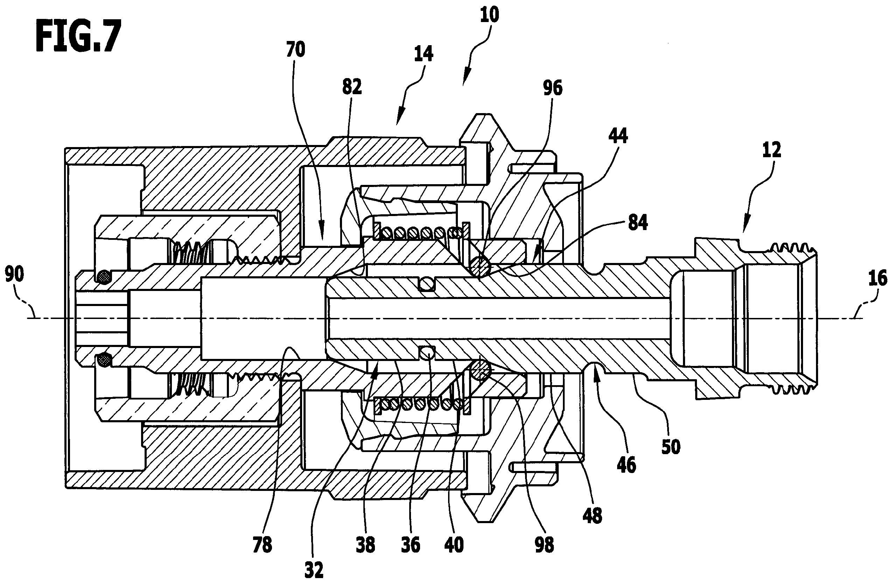

Trifft der erste Gleitführungsabschnitt 32 auf den ersten Aufnahmeabschnitt 78, wie dies in Figur 7 dargestellt ist, so trifft gleichzeitig der zweite Gleitführungsabschnitt 44 auf den zweiten Aufnahmeabschnitt 84. Dies hat zur Folge, dass die Längsachse 16 des Steckerteils 12 koaxial zur Längsachse 90 des Aufnahmekörpers 70 ausgerichtet und das Steckerteil 12 an zwei in axialem Abstand zueinander angeordneten Bereichen am Aufnahmekörper 70 abgestützt wird. Der erste Gleitführungsabschnitt 32 kann nunmehr ohne Weiteres in den ersten Aufnahmeabschnitt 78 eingeführt werden, und gleichzeitig kann der zweite Gleitführungsabschnitt 44 ohne Weiteres in den zweiten Aufnahmeabschnitt 84 eingeführt werden, ohne dass das Risiko besteht, dass das Steckerteil 12 verkantet.

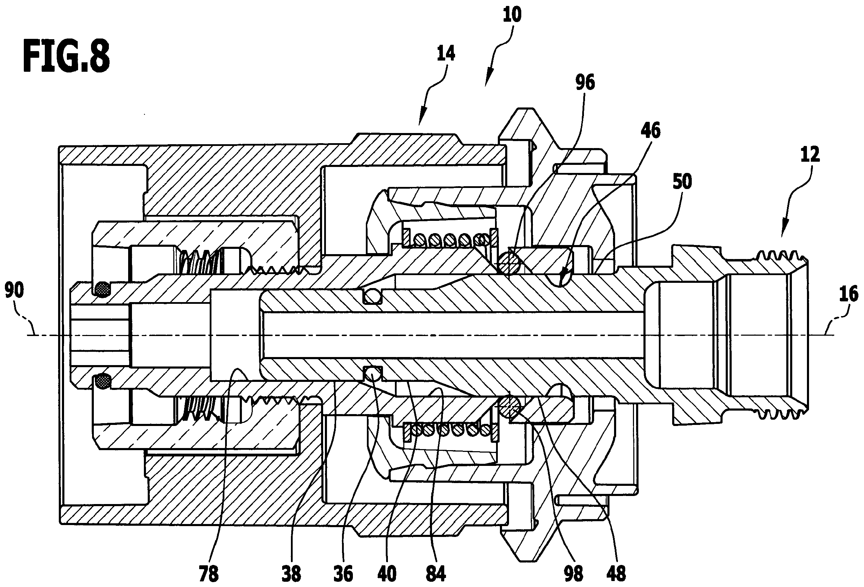

Beim weiteren Einsetzen des Stecknippels 20 in die Steckeraufnahme 72 wird der Dichtring 36 vom ersten Aufnahmeabschnitt 78 aufgenommen. Dies wird aus Figur 8 deutlich. Das Aufnehmen des Dichtrings 36 vom ersten Aufnahmeabschnitt 78 kann der Benutzer haptisch erfassen, das heißt er erhält eine Rückmeldung, dass nunmehr eine flüssigkeitsdichte Verbindung zwischen dem Steckerteil 12 und dem Buchsenteil 14 hergestellt ist.

Erst nachdem der Dichtring 36 eine Position im ersten Aufnahmeabschnitt 78 eingenommen hat, gelangt die Verriegelungsnut 46 in den Mündungsbereich der Verriegelungsschlitze 92, 94, so dass die federelastisch vorgespannten Verriegelungsstifte 96, 98 in die Verriegelungsnut 46 einrasten können. Zuvor wurden die Verriegelungsstifte 96, 98 vom Übergangsabschnitt 42 erfasst und aus ihrer Verriegelungsstellung auseinander gedrückt, wobei sie an der Außenseite des Übergangsabschnitts 42 und anschließend an der Außenseite des zweiten Gleitführungsabschnitts 44 entlanggeführt wurden.

Wenn die Verriegelungsstifte 96, 98 in die Verriegelungsnut 46 eingerastet sind, nimmt der Stecknippel 20 seine in Figur 1 dargestellte Endstellung ein. Auch das Einrasten der Verriegelungsstifte 96, 98 in die Verriegelungsnut 46 kann vom Benutzer haptisch erfasst werden.

Werden der Durchgangskanal 18 des Steckerteils 12 und der Durchlasskanal 76 des Aufnahmekörpers 70 von unter Hochdruck stehender Flüssigkeit durchströmt, so übt die Flüssigkeit eine axial wirkende Druckbelastung auf die Stirnfläche 28 des Stecknippels 20 aus, so dass der Stecknippel 20 in die dem Durchlasskanal 76 abgewandte Richtung gedrückt wird. Unter dem Einfluss der Druckbelastung werden die Verriegelungsstifte 96, 98 vom konischen Wandabschnitt 62 der Verriegelungsnut 46 jeweils gegen einen dem konischen Wandabschnitt 62 gegenüberliegenden Schlitzwandabschnitt 140 bzw. 142 der Verriegelungsschlitze 92, 94 gedrückt. Die Schlitzwandabschnitte 140, 142 sind in einem Neigungswinkel γ von 45° zur Längsachse 16 des Steckerteils 12 und der kollinear dazu ausgerichteten Längsachse 90 des Aufnahmekörpers 70 geneigt, wohingegen der konische Wandabschnitt 62 des Steckerteils 12, wie bereits erläutert, in einem Neigungswinkel β von 55° zu den genannten Längsachsen geneigt ist. Die Schlitzwandabschnitte 140, 142 und der konische Wandabschnitt 62 bilden somit schräg zueinander ausgerichtete Keilflächen aus, die zwischen sich die Verriegelungsstifte 96, 98 aufnehmen und zwischen sich einpressen. Bei einer axialen Druckbelastung können daher die Verriegelungsstifte 96, 98 nicht aus ihrer Verriegelungsstellung in ihre Freigabestellung übergehen, selbst wenn der Benutzer versehentlich die Schiebehülse 116 betätigt. Die Rastverbindung zwischen dem Steckerteil 12 und dem Buchsenteil 14 verriegelt sich somit bei einer axialen Druckbelastung selbsttätig und kann erst gelöst werden, wenn der Benutzer die axiale Druckbelastung beseitigt, indem er zum Beispiel eine die axiale Druckbelastung hervorrufende Hochdruckpumpe ausschaltet.

## Patentansprüche

1. Steckerteil (12) für eine Steckkupplung (10) für Flüssigkeitsleitungen einer Hochdruckreinigungseinrichtung, wobei das Steckerteil (12) einen sich koaxial zur Längsachse (16) des Steckerteils (12) erstreckenden Durchgangskanal (18) für unter Hochdruck stehende Flüssigkeit aufweist, und wobei das Steckerteil (12) einen Stecknippel (20) ausbildet, der unter Ausbildung einer flüssigkeitsdichten Verbindung in eine zugeordnete Steckeraufnahme (72) eines Buchsenteils (14) der Steckkupplung (10) einsteckbar und mit der Steckeraufnahme (72) lösbar verrastbar ist, wobei der Stecknippel (20) einen kreiszylindrischen ersten Gleitführungsabschnitt (32) aufweist, in dem eine in Umfangsrichtung umlaufende Dichtringnut (34) mit einem Dichtring (36) angeordnet ist, und wobei der Stecknippel (20) einen kreiszylindrischen zweiten Gleitführungsabschnitt (44) aufweist sowie eine Rastaufnahme (46), in die zwei parallel zueinander ausgerichtete, einander diametral gegenüberliegende, federbelastete zylindrische Verriegelungsstifte (96, 98) des Buchsenteils (14) einrastbar sind, wobei der zweite Gleitführungsabschnitt (44) einen Außendurchmesser aufweist, der um mindestens ein Viertel größer ist als der Außendurchmesser des ersten Gleitführungsabschnitts (32), und wobei die Rastaufnahme im zweiten Gleitführungsabschnitt (44) angeordnet und als in Umfangsrichtung umlaufende Verriegelungsnut (46) ausgestaltet ist, wobei der Abstand (L) zwischen der Mitte der Dichtringnut (34) und der Mitte der Verriegelungsnut (46) mindestens das Anderthalbfache des Außendurchmessers des ersten Gleitführungsabschnitts (32) beträgt, und wobei der erste Gleitführungsabschnitt (32) einen ersten Gleitführungsbereich (38) und einen zweiten Gleitführungsbereich (40) ausbildet, wobei der erste Gleitführungsbereich (38) auf der dem freien Ende (26) des Stecknippels (20) zugewandten Seite der Dichtringnut (34) angeordnet ist und wobei der zweite Gleitführungsbereich (40) auf der dem freien Ende (26) des Stecknippels (20) abgewandten Seite der Dichtringnut (34) angeordnet ist, und wobei der zweite Gleitführungsabschnitt (44) einen dritten Gleitführungsbereich (48) und einen vierten Gleitführungsbereich (50) ausbildet, wobei der dritte Gleitführungsbereich (48) auf der dem freien Ende (26) des Stecknippels (20) zugewandten Seite der Verriegelungsnut (46) angeordnet ist und wobei der vierte Gleitführungsbereich (50) auf der dem freien Ende (26) des Stecknippels (20) abgewandten Seite der Verriegelungsnut (46) angeordnet ist, **dadurch gekennzeichnet, dass** die Verriegelungsnut (46) einen sich an den dritten Gleitführungsbereich (48) anschließenden konischen Wandabschnitt (62) aufweist, dessen Durchmesser sich mit zunehmendem Abstand vom dritten Gleitführungsbereich (48) verringert und an den sich ein bogenförmiger Wandabschnitt (64) der Verriegelungsnut (46) anschließt, wobei der Konuswinkel (α) des konischen Wandabschnitts (62) mindestens 90°, insbesondere mehr als 90° beträgt.

2. Steckerteil nach Anspruch 1, **dadurch gekennzeichnet, dass** der Abstand zwischen der Mitte der Dichtringnut (34) und der Mitte der Verriegelungsnut (46) mindestens doppelt so groß ist wie der Außendurchmesser des ersten Gleitführungsabschnitts (32).

3. Steckerteil nach Anspruch 1 oder 2, **dadurch gekennzeichnet, dass** der Außendurchmesser des zweiten Gleitführungsabschnitts (44) maximal das Anderthalbfache des Außendurchmessers des ersten Gleitführungsabschnitts (32) beträgt.

4. Steckerteil nach Anspruch 1, 2 oder 3, **dadurch gekennzeichnet, dass** der Außendurchmesser des zweiten Gleitführungsabschnitts (44) um ein Drittel größer ist als der Außendurchmesser des ersten Gleitführungsabschnitts (32).

5. Steckerteil nach einem der voranstehenden Ansprüche, **dadurch gekennzeichnet, dass** der Stecknippel (20) zwischen dem ersten Gleitführungsabschnitt (32) und dem zweiten Gleitführungsabschnitt (44) einen Übergangsabschnitt (42) aufweist.

6. Steckerteil nach Anspruch 5, **dadurch gekennzeichnet, dass** sich der Durchmesser des Übergangsabschnitts (42) mit zunehmendem Abstand vom freien Ende (26) des Stecknippels (20) kontinuierlich erweitert.

7. Steckerteil nach Anspruch 6, **dadurch gekennzeichnet, dass** der Übergangsabschnitt (42) konisch ausgestaltet ist.

8. Steckerteil nach einem der Ansprüche 5 bis 7, **dadurch gekennzeichnet, dass** der Stecknippel (20) an seinem freien Ende (26) eine Stirnfläche (28) aufweist, deren Abstand zu dem der Stirnfläche (28) abgewandten Ende des Übergangsabschnitts (42) mindestens doppelt so groß ist wie der Außendurchmesser des ersten Gleitführungsabschnitts (32).

9. Steckerteil nach einem der voranstehenden Ansprüche, **dadurch gekennzeichnet, dass** der erste Gleitführungsbereich (38) länger ist als der zweite Gleitführungsbereich (40).

10. Steckerteil nach einem der voranstehenden Ansprüche, **dadurch gekennzeichnet, dass** der dritte Gleitführungsbereich (48) länger ist als der vierte Gleitführungsbereich (50).

11. Steckerteil nach einem der voranstehenden Ansprüche, **dadurch gekennzeichnet, dass** der Konuswinkel (α) 100° bis 120° beträgt.

12. Steckerteil nach einem der voranstehenden Ansprüche, **dadurch gekennzeichnet, dass** sich der bogenförmige Wandabschnitt (64) bis zum vierten Gleitführungsbereich (50) erstreckt.

13. Steckerteil nach Anspruch 12, **dadurch gekennzeichnet, dass** der bogenförmige Wandabschnitt (64) mit einer bezogen auf die Längsachse (16) des Steckerteils (12) radial ausgerichteten Tangente (66) in den vierten Gleitführungsbereich (50) übergeht.

14. Steckkupplung (10) für Flüssigkeitsleitungen einer Hochdruckreinigungseinrichtung mit einem Steckerteil (12) nach einem der voranstehenden Ansprüche und mit einem Buchsenteil (14), das einen Aufnahmekörper (70) aufweist mit einer Steckeraufnahme (72), in die der Stecknippel (20) unter Ausbildung einer flüssigkeitsdichten Verbindung einsteckbar ist und die mit dem Stecknippel (20) lösbar verrastbar ist, wobei der Aufnahmekörper (70) zwei einander diametral gegenüberliegende, schräg zur Längsachse (90) der Steckeraufnahme (72) ausgerichtete Verriegelungsschlitze (92, 94) aufweist, in denen jeweils ein zylindrischer Verriegelungsstift (96, 98) verschiebbar angeordnet ist, wobei die Verriegelungsstifte (96, 98) mittels einer am Aufnahmekörper (70) in axialer Richtung verschiebbaren Schiebehülse (116) entgegen einer federelastischen Rückstellkraft aus einer Verriegelungsstellung in eine Freigabestellung bewegbar sind, wobei die Verriegelungsstifte (96, 98) in der Verriegelungsstellung in die Verriegelungsnut (46) des Stecknippels (20) eintauchen und in der Freigabestellung die Verriegelungsnut (46) freigeben, wobei die Steckeraufnahme (72) einen ersten kreiszylindrischen Aufnahmeabschnitt (78) aufweist, der eine Dichtfläche ausbildet und der den ersten Gleitführungsabschnitt (32) des Stecknippels (20) formschlüssig aufnimmt, und wobei die Steckeraufnahme (72) einen zweiten kreiszylindrischen Aufnahmeabschnitt (84) aufweist, in den die Verriegelungsschlitze (92, 94) einmünden und der den zweiten Gleitführungsabschnitt (44) des Stecknippels (20) formschlüssig aufnimmt.

15. Steckkupplung nach Anspruch 14, **dadurch gekennzeichnet, dass** beim Einstecken des Stecknippels (20) in die Steckeraufnahme (72) der erste Gleitführungsabschnitt (32) am ersten Aufnahmeabschnitt (78) und gleichzeitig der zweite Gleitführungsabschnitt (44) am zweiten Aufnahmeabschnitt (84) zur Anlage gelangen.

16. Steckkupplung nach Anspruch 14 oder 15, **dadurch gekennzeichnet, dass** jeder Verriegelungsschlitz (92, 94) einen Schlitzwandabschnitt (140, 142) aufweist, an dem ein Verriegelungsstift (96, 98) in der Verriegelungsstellung mit einem aus der zugeordneten Verriegelungsnut (46) herausragenden Stiftbereich anliegt, wobei der Schlitzwandabschnitt (140, 142) in einem Neigungswinkel (γ) zur Längsachse (16) des Stecknippels (20) ausgerichtet ist, der gleich groß oder kleiner ist als der Neigungswinkel (β) eines dem Schlitzwandabschnitt (140, 142) gegenüberliegenden konischen Wandabschnitts (62) der Verriegelungsnut (46).

17. Steckkupplung nach Anspruch 16, **dadurch gekennzeichnet, dass** der Neigungswinkel (γ) des Schlitzwandabschnitts (140, 142) maximal 45° und der Neigungswinkel (β) des konischen Wandabschnitts (62) mindestens 45° beträgt.

## Claims

1. Plug part (12) for a plug-and-socket coupling (10) for liquid conduits of a high-pressure cleaning apparatus, wherein the plug part (12) comprises a through-channel (18) for liquid under high pressure extending coaxially with respect to the longitudinal axis (16) of the plug part (12) and wherein the plug part (12) forms a plug nipple (20) which is insertable into an associated plug receptacle (72) of a socket part (14) of the plug-and-socket coupling (10), forming a liquid-tight connection, and is disconnectably latchable together with the plug receptacle (72), wherein the plug nipple (20) comprises a circular-cylindrical first sliding guide section (32) in which is arranged a sealing ring groove (34) extending therearound in a circumferential direction, said sealing ring groove (34) having a sealing ring (36) therein, and wherein the plug nipple (20) comprises a circular-cylindrical second sliding guide section (44) and a latching receptacle (46) into which are latchable two spring-loaded cylindrical locking pins (96, 98) of the socket part (14) that are oriented parallel to each other and lie diametrically opposite one another, wherein the second sliding guide section (44) has an external diameter which is at least one-quarter larger than the external diameter of the first sliding guide section (32) and wherein the latching receptacle is arranged in the second sliding guide section (44) and is configured as a locking groove (46) extending therearound in a circumferential direction, wherein the distance (L) between the centre of the sealing ring groove (34) and the centre of the locking groove (46) is at least one and a half times the external diameter of the first sliding guide section (32), and wherein the first sliding guide section (32) forms a first sliding guide region (38) and a second sliding guide region (40), wherein the first sliding guide region (38) is arranged on the side of the sealing ring groove (34) facing towards the free end (26) of the plug nipple (20) and wherein the second sliding guide region (40) is arranged on the side of the sealing ring groove (34) facing away from the free end (26) of the plug nipple (20), and wherein the second sliding guide section (44) forms a third sliding guide region (48) and a fourth sliding guide region (50), wherein the third sliding guide region (48) is arranged on the side of the locking groove (46) facing towards the free end (26) of the plug nipple (20) and wherein the fourth sliding guide region (50) is arranged on the side of the locking groove (46) facing away from the free end (26) of the plug nipple (20), **characterized in that** the locking groove (46) comprises a conical wall section (62) which adjoins the third sliding guide region (48) and the diameter of which decreases with increasing distance from the third sliding guide region (48) and which is adjoined by an arcuate wall section (54) of the locking groove (46), wherein the cone angle (α) of the conical wall section (62) is at least 90°, in particular more than 90°.

2. Plug part in accordance with claim 1, **characterized in that** the distance between the centre of the sealing ring groove (34) and the centre of the locking groove (46) is at least twice the external diameter of the first sliding guide section (32).

3. Plug part in accordance with claim 1 or 2, **characterized in that** the external diameter of the second sliding guide section (44) is no greater than one and a half times the external diameter of the first sliding guide section (32).

4. Plug part in accordance with claim 1, 2 or 3, **characterized in that** the external diameter of the second sliding guide section (44) is one-third larger than the external diameter of the first sliding guide section (32).

5. Plug part in accordance with any one of the preceding claims, **characterized in that** the plug nipple (20) comprises a transition section (42) between the first sliding guide section (32) and the second sliding guide section (44).

6. Plug part in accordance with claim 5, **characterized in that** the diameter of the transition section (42) widens continuously with increasing distance from the free end (26) of the plug nipple (20).

7. Plug part in accordance with claim 6, **characterized in that** the transition section (42) is of conical configuration.

8. Plug part in accordance with any one of claims 5 to 7, **characterized in that** the plug nipple (20) comprises at the free end (26) thereof an end face (28) whose distance to the end of the transition section (42) facing away from the end face (28) is at least twice the size of the external diameter of the first sliding guide section (32).

9. Plug part in accordance with any one of the preceding claims, **characterized in that** the first sliding guide region (38) is longer than the second sliding guide region (40).

10. Plug part in accordance with any one of the preceding claims, **characterized in that** the third sliding guide region (48) is longer than the fourth sliding guide region (50).

11. Plug part in accordance with any one of the preceding claims, **characterized in that** the cone angle (α) is 100° to 120°.

12. Plug part in accordance with any one of the preceding claims, **characterized in that** the arcuate wall section (64) extends to the fourth sliding guide region (50).

13. Plug part in accordance with claim 12, **characterized in that** the arcuate wall section (64) transitions into the fourth sliding guide region (50) with a tangent (66) that is radially oriented with respect to the longitudinal axis (16) of the plug part (12).

14. Plug-and-socket coupling (10) for liquid conduits of a high-pressure cleaning apparatus having a plug part (12) in accordance with any one of the preceding claims and having a socket part (14) which comprises a receiving body (70) having a plug receptacle (72) into which the plug nipple (20) is insertable, forming a liquid-tight connection, and which is disconnectably latchable together with the plug nipple (20), wherein the receiving body (70) comprises two locking slots (92, 94) that are oriented at an incline to the longitudinal axis (90) of the plug receptacle (72) and lie diametrically opposite one another and each of which has a cylindrical locking pin (96, 98) arranged for displacement therein, wherein the locking pins (96, 98) are movable from a locking position to a release position by way of a sliding sleeve (116) which is displaceable in an axial direction on the receiving body (70), against the action of a resilient return force, wherein the locking pins (96, 98) in the locking position enter the locking groove (46) of the plug nipple (20) and in the release position release the locking groove (46), wherein the plug receptacle (72) comprises a first circular-cylindrical receiving section (78) which forms a sealing surface and receives the first sliding guide section (32) of the plug nipple (20) in a form-locking manner, and wherein the plug receptacle (72) comprises a second circular-cylindrical receiving section (84) which has the locking slots (92, 94) opening thereinto and which receives the second sliding guide section (44) of the plug nipple (20) in a form-locking manner.

15. Plug-and-socket coupling in accordance with claim 14, **characterized in that** when the plug nipple (20) is inserted into the plug receptacle (72), the first sliding guide section (32) comes into contact against the first receiving section (78) and the second sliding guide section (44) comes into contact against the second receiving section (84) simultaneously.

16. Plug-and-socket coupling in accordance with claim 14 or 15, **characterized in that** each locking slot (92, 94) has a slot wall section (140, 142) against which a locking pin (96, 98) in the locking position is in contact at a pin portion thereof protruding from the associated locking groove (46), wherein the slot wall section (140, 142) is oriented at an angle of inclination (γ) to the longitudinal axis (16) of the plug nipple (20) that is equal to or less than the angle of inclination (β) of a conical wall section (72) of the locking groove (46) lying opposite the slot wall section (140, 142).

17. Plug-and-socket coupling in accordance with claim 16, **characterized in that** the angle of inclination (γ) of the slot wall section (140, 142) is no greater than 45° and the angle of inclination (β) of the conical wall section (62) is at least 45°.

## Revendications

1. Partie mâle (12) pour un accouplement enfichable (10) pour des conduites de liquide d'un dispositif de nettoyage à haute pression, dans laquelle la partie mâle (12) présente un canal de passage (18), s'étendant de manière coaxiale par rapport à l'axe longitudinal (16) de la partie mâle (12), pour un liquide sous haute pression, et dans laquelle la partie mâle (12) réalise un raccord enfichable (20), qui peut être enfiché dans un logement d'enfichage (72) associé d'une partie femelle (14) de l'accouplement enfichable (10) avec formation d'une liaison étanche au liquide et peut être encliqueté de manière libérable avec le logement d'enfichage (72), dans laquelle le raccord enfichable (20) présente une première section de guidage à glissement (32) cylindrique circulaire, dans laquelle est disposée une rainure de bague d'étanchéité (34), s'étendant dans la direction périphérique, avec une bague d'étanchéité (36), et dans laquelle le raccord enfichable (20) présente une deuxième section de guidage à glissement (44) cylindrique circulaire, ainsi qu'un logement d'encliquetage (46), dans lequel peuvent être encliquetées deux goupilles de verrouillage (96, 98) cylindriques orientées parallèlement l'une à l'autre, diamétralement opposées l'une à l'autre, sollicitées par un ressort, de la partie femelle (14), dans laquelle la deuxième section de guidage à glissement (44) présente un diamètre extérieur, qui est d'au moins un quart plus grand que le diamètre extérieur de la première section de guidage à glissement (32), et dans laquelle le logement d'encliquetage est disposé dans la deuxième section de guidage à glissement (44) et réalisé en tant que rainure de verrouillage (46) s'étendant dans la direction périphérique, dans laquelle l'écart (L) entre le centre de la rainure de bague d'étanchéité (34) et le centre de la rainure de verrouillage (46) atteint au moins une fois et demie le diamètre extérieur de la première section de guidage à glissement (32), et dans laquelle la première section de guidage à glissement (32) réalise une première zone de guidage à glissement (38) et une deuxième zone de guidage à glissement (40), dans laquelle la première zone de guidage à glissement (38) est disposée sur la face, tournée vers l'extrémité libre (26) du raccord enfichable (20), de la rainure de bague d'étanchéité (34) et dans laquelle la deuxième zone de guidage à glissement (40) est disposée sur la face, opposée à l'extrémité libre (26) du raccord enfichable (20), de la rainure de bague d'étanchéité (34), et dans laquelle la deuxième section de guidage à glissement (44) réalise une troisième zone de guidage à glissement (48) et une quatrième zone de guidage à glissement (50), dans laquelle la troisième zone de guidage à glissement (48) est disposée sur la face de la rainure de verrouillage (46) tournée vers l'extrémité libre (26) du raccord enfichable (20) et dans laquelle la quatrième zone de guidage à glissement (50) est disposée sur la face, opposée à l'extrémité libre (26) du raccord enfichable (20), de la rainure de verrouillage (46), **caractérisée en ce que** la rainure de verrouillage (46) présente une section de paroi conique (62), se raccordant à la troisième zone de guidage à glissement (48), dont le diamètre diminue à mesure qu'augmente l'écart par rapport à la troisième zone de guidage à glissement (48), et à laquelle se raccorde une section de paroi (64) arquée de la rainure de verrouillage (46), dans laquelle l'angle de cône (α) de la section de paroi conique (62) atteint au moins 90°, en particulier plus de 90°.

2. Partie mâle selon la revendication 1, **caractérisée en ce que** l'écart entre le centre de la rainure de bague d'étanchéité (34) et le centre de la rainure de verrouillage (46) est au moins deux fois plus grand que le diamètre extérieur de la première section de guidage à glissement (32).

3. Partie mâle selon la revendication 1 ou 2, **caractérisée en ce que** le diamètre extérieur de la deuxième section de guidage à glissement (44) atteint au maximum une fois et demie le diamètre extérieur de la première section de guidage à glissement (32).

4. Partie mâle selon la revendication 1, 2 ou 3, **caractérisée en ce que** le diamètre extérieur de la deuxième section de guidage à glissement (44) est d'un tiers plus grand que le diamètre extérieur de la première section de guidage à glissement (32).

5. Partie mâle selon l'une quelconque des revendications précédentes, **caractérisée en ce que** le raccord enfichable (20) présente entre la première section de guidage à glissement (32) et la deuxième section de guidage à glissement (44) une section de transition (42).

6. Partie mâle selon la revendication 5, **caractérisée en ce que** le diamètre de la section de transition (42) s'élargit en continu à mesure qu'augmente l'écart par rapport à l'extrémité libre (26) du raccord enfichable (20).

7. Partie mâle selon la revendication 6, **caractérisée en ce que** la section de transition (42) est réalisée de manière conique.

8. Partie mâle selon l'une quelconque des revendications 5 à 7, **caractérisée en ce que** le raccord enfichable (20) présente à son extrémité libre (26) une surface frontale (28), dont l'écart par rapport à l'extrémité de la section de transition (42) opposée à la surface frontale (28) est au moins deux fois plus grand que le diamètre extérieur de la première section de guidage à glissement (32).

9. Partie mâle selon l'une quelconque des revendications précédentes, **caractérisée en ce que** la première zone de guidage à glissement (38) est plus longue que la deuxième zone de guidage à glissement (40) .

10. Partie mâle selon l'une quelconque des revendications précédentes, **caractérisée en ce que** la troisième zone de guidage à glissement (48) est plus longue que la quatrième zone de guidage à glissement (50) .

11. Partie mâle selon l'une quelconque des revendications précédentes, **caractérisée en ce que** l'angle de cône (α) atteint 100° à 120°.

12. Partie mâle selon l'une quelconque des revendications précédentes, **caractérisée en ce que** la section de paroi (64) arquée s'étend jusqu'à la quatrième zone de guidage à glissement (50).

13. Partie mâle selon la revendication 12, **caractérisée en ce que** la section de paroi (64) arquée passe avec une tangente (66) orientée radialement par rapport à l'axe longitudinal (16) de la partie mâle (12) dans la quatrième zone de guidage à glissement (50) .

14. Accouplement enfichable (10) pour conduites de liquide d'un dispositif de nettoyage à haute pression avec une partie mâle (12) selon l'une quelconque des revendications précédentes et avec une partie femelle (14), qui présente un corps de logement (70) avec un logement d'enfichage (72), dans lequel le raccord enfichable (20) peut être enfiché avec formation d'une liaison étanche au liquide et qui peut être encliqueté de manière libérable avec le raccord enfichable (20), dans lequel le corps de logement (70) présente deux fentes de verrouillage (92, 94) diamétralement opposées l'une à l'autre, orientées de manière inclinée par rapport à l'axe longitudinal (90) du logement d'enfichage (72), dans lesquelles respectivement une goupille de verrouillage (96, 98) cylindrique est disposée de manière coulissante, dans lequel les goupilles de verrouillage (96, 98) peuvent être déplacées d'une position de verrouillage dans une position de libération à l'encontre d'une force de rappel élastique au moyen d'un manchon coulissant (116) pouvant coulisser dans la direction axiale sur le corps de logement (70), dans lequel les goupilles de verrouillage (96, 98), dans la position de verrouillage, s'enfoncent dans la rainure de verrouillage (46) du raccord enfichable (20) et, dans la position de libération, libèrent la rainure de verrouillage (46), dans lequel le logement d'enfichage (72) présente une première section de logement (78) cylindrique circulaire, qui réalise une surface d'étanchéité et qui loge la première section de guidage à glissement (32) du raccord enfichable (20) par coopération de formes, et dans lequel le logement d'enfichage (72) présente une deuxième section de logement (84) cylindrique circulaire, dans laquelle les fentes de verrouillage (92, 94) débouchent et qui loge la deuxième section de guidage à glissement (44) du raccord enfichable (20) par coopération de formes.

15. Accouplement enfichable selon la revendication 14, **caractérisé en ce que**, lors de l'enfichage du raccord enfichable (20) dans le logement d'enfichage (72), la première section de guidage à glissement (32) parvient en appui sur la première section de logement (78) et simultanément la deuxième section de guidage à glissement (44) sur la deuxième section de logement (84).

16. Accouplement enfichable selon la revendication 14 ou 15, **caractérisé en ce que** chaque fente de verrouillage (92, 94) présente une section de paroi de fente (140, 142), contre laquelle une broche de verrouillage (96, 98), dans la position de verrouillage, s'applique avec une zone de broche faisant saillie de la rainure de verrouillage (46) associée, dans lequel la section de paroi de fente (140, 142) est orientée selon un angle d'inclinaison (γ) par rapport à l'axe longitudinal (16) du raccord enfichable (20) qui est inférieur ou égal à l'angle d'inclinaison (β) d'une section de paroi (62) conique, opposée à la section de paroi de fente (140, 142), de la rainure de verrouillage (46).

17. Accouplement enfichable selon la revendication 16, **caractérisé en ce que** l'angle d'inclinaison (γ) de la section de paroi de fente (140, 142) atteint au maximum 45° et l'angle d'inclinaison (β) de la section de paroi conique (62) au moins 45°.
